# EUROPÄISCHE PATENTSCHRIFT

(11) **EP 1 979 611 B1**
(45) Veröffentlichungstag und Bekanntmachung des Hinweises auf die Patenterteilung: **17.11.2010**
(21) Anmeldenummer: 07702344.8
(22) Anmeldetag: 17.01.2007
(51) Int. Cl.: F03B 17/06, F03D 3/06

(54) **ROTATIONSVORRICHTUNG ZUR VERWENDUNG IN EINEM FLUID**
ROTATING DEVICE TO BE USED IN A FLUID
DISPOSITIF DE ROTATION À UTILISER DANS UN FLUIDE

(30) Priorität: 17.01.2006 DE 102006002137
(43) Veröffentlichungstag der Anmeldung: 15.10.2008
(73) Patentinhaber: Aquapower GmbH, 55481 Rödern (Hunsrück) (DE)
(72) Erfinder: SCHIEL, Hans-Josef, 55481 Lindenschied (DE)
(74) Vertreter: Seitz, Ralf Hans Frank
(86) Internationale Anmeldenummer: PCT/DE2007/000063
(87) Internationale Veröffentlichungsnummer: WO 2007/082506

(56) Entgegenhaltungen:
- WO-A-2004/061299
- DE-A1- 3 606 549
- GB-A- 2 263 735
- GB-A- 2 356 431
- US-A- 4 260 328
- US-A- 5 324 164

## Beschreibung

Die Erfindung betrifft eine Rotationsvorrichtung zur Verwendung in einem Fluid zum Zweck der Energiegewinnung aus der Strömungsbewegung eines Fluids oder zum Zweck der Umwandlung von Energie in eine Bewegung eines Fluids gemäβ dem Oberbegriff von Anspruch 1. Eine solche Vorrichtung ist Z.B. aus der DE-A-3606549 bekannt. Mittels der Rotationsvorrichtung der Erfindung oder ähnlichen Vorrichtungen kann Energie aus einem strömenden Fluid, das ein Gas oder eine Flüssigkeit sein kann, z.B. Wind oder Wasser, durch Anordnen der Rotationsvorrichtung in dem Fluid gewonnen werden, wie es z.B. auch bei einer Turbine der Fall ist. Umgekehrt kann, indem die Rotationsvorrichtung in Bewegung durch einen extra Antrieb versetzt wird, die Strömungsbewegung eines Fluids erzeugt werden.

In der Praxis sind Windkrafträder, Turbinen, Propeller oder Schiffsschrauben als ähnliche, rotierende Vorrichtungen bzw. Rotoren bekannt und im Einsatz. Alle diese Systeme zeigen eine zu kleine Differenzgeschwindigkeit zwischen der anströmenden. Masse und der rotierenden Wirkfläche der Rotationssysteme als angetriebene Systeme oder zwischen der Wirkfläche und dem anzutreibenden Fluid und damit einen relativ schlechten Wirkungsgrad.

In der DE 3606549 A1 ist ein Verfahren und eine Vorrichtung zum Erzeugen einer Bewegung bzw. zur Energieumwandlung beschrieben, bei dem wenigstens zwei Flügel oder Drehflächen mit Stromlinienprofil auf einer geschlossenen Umlaufbahn geführt werden.

Auch die US 5,324,164 beschreibt eine Vorrichtung für ein aktives Fluid, die mehrere Flügel mit variabler Einstellung hat. Die WO 2004/061299 A1 enthält eine Windturbine mit einer waagrechten Welle, die in einem Rotorrahmen gelagert ist. In der GB 2263735 A ist eine weitere bekannte Windturbine mit einer Blatteinstellung und -steuerung beschrieben. Die GB 2356431 A beschreibt eine Windturbine mit einer vertikalen Achse. Ähnlich hierzu ist in US 4,260,328 eine Windmühle mit einer vertikalen Achse beschrieben.

In der DE 103 24 455 A1 wird ein Rotationssegel als bekannte Rotationsvorrichtung beschrieben, in der zu der Rotation der Wirkflächen oder Blätter um einen Mittelpunkt eine zusätzliche Verdrehung einer Fläche um die eigene Achse durchgeführt wird und in der eine oder mehrere Flächen in einem Hauptrotationskörper der Rotationsvorrichtung eine halbe Drehung zurücklegen und sich dabei in einem Verhältnis 1:2 gegen die Drehrichtung des Hauptrotationskörpers drehen. Da die Anströmung der Wirkflächen jedoch zu einer abreißenden Strömung an der Wirkfläche führen kann, ist der Wirkungsgrad der bekannten Rotationsvorrichtung niedrig.

Es ist deshalb Aufgabe der Erfindung eine Rotationsvorrichtung anzugeben, die einen verbesserten Wirkungsgrad zeigt.

Diese Aufgabe wird durch die Rotationsvorrichtung der Erfindung gemäß Anspruch 1 gelöst.

Unter Auftriebsprinzip wird hier ein Zustand der Strömung an der Drehfläche, die man auch als Rotorblatt oder Flügel bezeichnen kann, verstanden, in dem die Strömung des Fluids an der Drehfläche kontinuierlich ist. Das Auftriebsprinzip liegt nicht mehr vor, wenn die Strömung des Fluids an der Drehfläche abreißt oder diskontinuierlich wird oder an der Drehfläche eine Wirbelbildung der Strömung auftritt. Ein Vorteil der Rotationsvorrichtung der Erfindung besteht darin, dass die Lage der Drehflächen zur Strömungsrichtung mittels der Stelleinrichtung immer innerhalb des Auftriebsprinzips gehalten wird, um einen maximalen Wirkungsgrad der Rotations-vorrichtung zu erreichen.

Bevorzugt ist ein Winkel der Drehfläche(n) zur Strömungsrichtung des Fluids in einem Bereich von - 25 ° bis 25 ° (Winkelgrad).

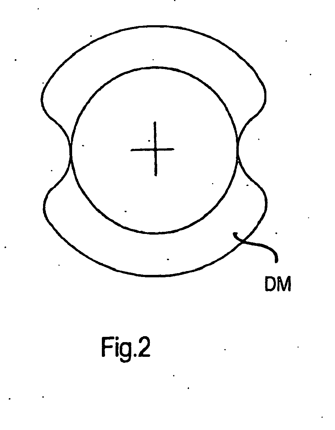

In einer bevorzugten Ausführungsform der Rotationsvorrichtung der Erfindung sind die Winkel der Drehflächen zur Strömungsrichtung des Fluids über eine volle Drehung der Hauptdreheinrichtung um ihre zentrale Achse abschnittsweise konstant. Die Stelleinrichtung kann den Winkel der Drehfläche oder Drehflächen über 0 °- 180 ° (1. und 2. Quadrant) der Drehbewegung des Hauptdreheinrichtung auf einen ersten, konstanten, positiven Winkel einstellen und über 180 ° bis 360 ° (3. und 4. Quadrant) der Drehbewegung der Hauptdreheinrichtung auf einen zweiten, konstanten, negativen Winkel zur Strömungsrichtung des Fluids einstellen, wobei der Winkel des einen Winkelbereichs den gleichen Wert oder Betrag wie der Winkel des anderen Winkelbereichs mit jedoch umgekehrten Vorzeichen bezüglich der Strömungsrichtung des Fluids hat. Dies hat den Vorteil, dass das wirkende Drehmoment bis auf die neutralen Stellungen der Drehfläche(n) bei 0 ° bzw. 180° im wesentlichen konstant und positiv ist, wodurch eine gleichmäßige, effektive Drehbewegung des Rotors bzw. der Rotationsvorrichtung erhalten wird. Dies wird auch schematisch in Fig. 2 gezeigt, die ein Diagramm für das wirkende Drehmoment an der Dreheinrichtung zeigt.

Bevorzugt stellt die Stelleinrichtung oder Steuereinrichtung die Drehfläche(n) zur Strömungsrichtung auf einen optimalen Wert des Winkels ein, der, wie sich gezeigt hat, nahe am Abriss des Auftriebs der Drehfläche(n) ist.

Die Stelleinrichtung kann einen Steuernocken oder eine Steuerkurve, der oder die fest mit der zentralen Drehachse der Hauptdreheinrichtung gekoppelt ist, und einen Antrieb haben, der mit der Steuernocken bzw. der Steuerkurve und der Drehfläche oder den Drehflächen gekoppelt ist und die Bewegung des Steuernockens oder der Steuerkurve in eine Drehbewegung der Drehfläche bzw. Drehflächen zum Einstellen des Winkels der Drehflächen zur Strömungsrichtung des Fluids umsetzt. Durch diesen Aufbau wird eine zuverlässige und genaue Einstellung der Lage der Drehflächen erreicht.

In Alternative kann die Stelleinrichtung einen elektrischen oder elektromotorischen Antrieb haben, der mit der Drehfläche bzw. den Drehflächen gekoppelt ist und in Abhängigkeit von der Drehposition der Hauptdreheinrichtung den Winkel der Drehfläche bzw. der Drehflächen einstellt.

Die Stelleinrichtung kann auch eine neutrale Stellung oder einen neutralen Winkel der Drebfläche(n) bezüglich der Strömungsrichtung einstellen, in der die jeweilige Drehfläche auf die Hauptdreheinrichtung der Rotationsvorrichtung der Erfindung kein Drehmoment ausübt. Damit kann verhindert werden, dass die Rotationsvorrichtung durch eine zu starke Strömung oder stoßartige Strömung beschädigt wird. Bevorzugt beträgt der Stellwinkel der Drehfläche in der neutralen Stellung 0 °.

Die Rotationsvorrichtung der Erfindung hat ein Pendelsteuerrad, das auf der zentralen Drehachse der Rotationsvorrichtung lose gelagert ist, aber nicht starr oder kraftschlüssig mit der zentralen Drehachse radial verbunden ist, das weiterhin mit der Drehfläche bzw. den Drehflächen gekoppelt ist und seine Pendelbewegung oder Hin-und-Her-Drehverstellung auf die Drehflächen überträgt.

In einer bevorzugten Ausführungsform der Erfindung sind die Drehfläche oder Drehflächen der Rotationsvorrichtung formveränderbar ausgebildet, um den Winkel der jeweiligen Drehfläche zu der Strömungsrichtung durch die Stelleinrichtung einstellen zu können. Durch die Veränderung der Form der Drehfläche, insbesondere die Veränderbarkeit des umströmten Querschnitts der Drehfläche oder des Rotorflügels, kann ein hoher Wirkungsgrad der Rotationsvorrichtung der Erfindung erzeugt werden.

Au gemein rotieren bei der Erfindung die Drehflächen in einem Rotationskörper um einen Mittelpunkt M und werden dabei durch eine elektrische oder mechanische Untersetzung, einen Antrieb oder ein Getriebe derart gesteuert, dass sich die Drehflächen zwar relativ auf den Rotationskörper bezogen im Verhältnis eins zu eins entgegen der Drehrichtung des Rotationskörpers um M drehen, auf einen außenstehenden Beobachter jedoch den Eindruck einer unveränderten Lage erwecken.

Eine ungleichförmige Untersetzung, mechanisch oder elektrisch betrieben, kann die Drehflächen auf den ersten 180 ° Grad der Drehbewegung um M, in einen strömungsgünstigen Winkel von z.B. 10 - 12 Grad, der eigentlichen Untersetzung voreilend, einstellen und auf den zweiten 180 Grad wieder in einen strömungsgünstigen Winkel von z.B. 10 - 12 Grad nacheilend einstellen. Die ungleichförmige Untersetzung in den Quadranten z.B. drei und vier lässt die Drehfläche um einen Winkel von z.B. 10 Grad bezüglich der Strömungsrichtung des Mediums voreilen und in den Quadranten eins und zwei um einen Winkel von z.B. 10 Grad nacheilen. Dadurch wird ermöglicht, dass die jeweilige Drehfläche für einen großen Abschnitt des Drehwinkels bei einer Drehbewegung auf einer Kreisbahn um eine zentrale Achse M in einem günstigen Wirkwinkel zur anströmenden wie zur abströmenden Fuidmasse steht.

Die Hauptuntersetzung 1 : 1 der Erfindung sorgt für eine Lage der Drehflächen zur Strömungsrichtung des Fluids, die sich bei der Rotation der Hauptdreheinrichtung immer parallel zur Strömungsrichtung befinden und nur durch die Bewegung eines Pendelsteuerrads oder eines ähnlichen anderen oder direkten Antriebes in eine Stellung gebracht werden, die einen Auftrieb erzeugt.

Durch einen günstigen Wirkwinkel zu der anströmenden wie zur abströmenden Masse wird keine Mischung von Widerstands- und Auftriebsprinzip erzeugt. Ein wesentliches Merkmal der Rotationsvorrichtung der Erfindung ist deshalb ein reines Auftriebsprinzip, dass nur bei den Wendepunkten der Winkeleinstellung unterbrochen wird.

Ein weiteres Merkmal der Erfindung ist die Pendelbewegung, die die Drehflächen in der einen Hälfte ihrer Kreisbewegung in einen positiven Anstellwinkel und in der anderen Hälfte der Kreisbewegung in einen negativen Anstellwinkel der jeweiligen Drehfläche zur Strömungsrichtung des Fluids bringt.

Durch die Untersetzung 1:1 kann bei einer neutralen Stellung eines Pendelsteuerrads der Stelleinrichtung der Rotationsvorrichtung eine drehmomentneutrale Stellung der Drehflächen erreicht werden.

Die Rotationsvorrichtung der vorliegenden Erfindung kann z.B. als Windkraftrad, als Turbine, als Propeller oder Schiffsschraube verwendet werden.

Weitere vorteilhafte Weiterbildungen der Erfindung sind den Unteransprüchen zu entnehmen.

Weiter Vorteile, vorteilhafte Weiterbildungen und Anwendungsmöglichkeiten der vorliegenden Erfindung sind der nachfolgenden detaillierten Beschreibung von beispielhaften, bevorzugten Ausbildungsformen in Verbindung mit den Zeichnungen zu entnehmen. Es zeigen:
- Fig. 1: eine schematische Draufsicht auf eine erste beispiel- hafte Ausführungsform der Rotationsvorrichtung der Er- findung mit zwei Drehflächen und eingezeichneten neut- ralen Stellungen der Drehflächen;
- Fig. 2: ein schematisches, erläuterndes Diagramm des auftre- tenden Drehmoments in der Rotationsvorrichtung der Er- findung über eine volle Umdrehung;
- Fig. 3: eine detailreiche Schnittansicht der ersten Ausfüh- rungsform von Fig. 1 in der Seitenansicht;
- Fig. 4: eine Detailansicht, die eine Stelleinrichtung für die Drehflächen der ersten Ausführungsform von Fig. 1 bis 3 zeigt;
- Fig. 5: eine Ansicht der Stelleinrichtung von Fig. 4 in Rich- tung des Pfeils V in Fig. 4 gesehen;
- Fig. 6: eine weitere Detailansicht, die eine alternative Stelleinrichtung zur Ausführungsform von Fig. 4 zeigt;
- Fig. 7: eine Ansicht der Stelleinrichtung von Fig. 6 in Rich- tung des Pfeils VII in Fig. 7 gesehen;
- Fig. 8: eine schematische Draufsicht auf eine zweite beispiel- hafte Ausführungsform der Rotationsvorrichtung der Er- findung mit zwei formveränderbaren Drehflächen und eingezeichneten neutralen Stellungen der Drehflächen;
- Fig. 9: eine detailreiche Schnittansicht der zweiten Ausfüh- rungsform von Fig. 8 in der Seitenansicht;
- Fig. 10: eine erweitere, teilweise Detailansicht von Fig. 8, die insbesondere eine Stelleinrichtung für die form- veränderbaren Drehflächen der zweiten Ausführungs- form von Fig. 8 und 9 zeigt;
- Fig. 11: eine Ansicht des Details von Fig. 10 in Richtung des Pfeiles XI in Fig. 10 gesehen;
- Fig. 12: eine vergrößerte Detailansicht von Fig. 10, die insbe- sondere einen Teil der Stelleinrichtung zeigt;
- Fig. 13: eine herausgetrennte Detailansicht einer formveränder- baren Drehfläche mit Stelleinrichtung in einer ersten, ausgelenkten Winkelstellung der Drehfläche;
- Fig. 14: eine schematische Draufsicht einer weiteren, dritten Ausführungsform der Rotationsvorrichtung der Erfindung mit vier bewegungssynchronisierten Drehflächen.

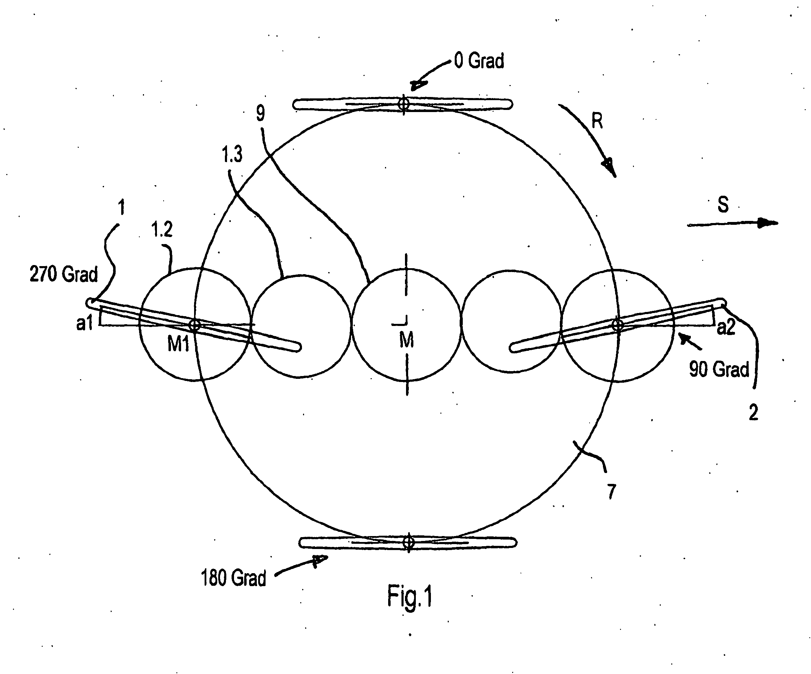

In Fig. 1 ist eine schematische Draufsicht auf eine erste beispielhafte Ausführungsform der Rotationsvorrichtung der Erfindung mit zwei gleich aufgebauten, gegenüberliegend angeordneten, mit der Strömung eines Fluids beaufschlagten Drehflächen 1 und 2 bei einer beispielhaften, drehmomentwirksamen Stellung bei 270 ° Winkelgrad bzw. 90 ° bezüglich der Kreisbewegung einer Drehfläche 1, 2 in der Rotationsvorrichtung um eine zentrale Drehachse M der Rotationsvorrichtung über insgesamt 360 ° gezeigt. Die Richtung der Kreisbewegung wird in Fig. 1 mit einem Pfeil R verdeutlicht. Zudem sind in Fig. 1 auch neutrale Stellungen der Drehflächen eingezeichnet, die bei 0 ° und 180 ° liegen und in denen die Drehflächen parallel zu einer Strömungsrichtung eines Fluids, z.B. von Wasser oder Wind, ausgerichtet sind. Die Strömungsrichtung des Fluids ist in Fig. 1 durch einen Pfeil S angegeben. In der neutralen Stellung erzeugen die Drehflächen 1, 2 keine Drehmoment.

Die drehbare Drehfläche 1 hat in der gezeigten Stellung von Fig. 1 einen positiven Winkel a1 von z.B. + 10 ° Winkelgrad zur Strömungsrichtung S des Fluids, während die Drehfläche 2 in der momentanen Stellung von Fig. 1 einen negativen Winkel a2 von z.B. - 10 ° zur Strömungsrichtung S hat. Die mathematischen Beträge der Winkel a1 und a2 sind also gleich groß. Verfolgt man eine vollständige Kreisbewegung der ersten Drehfläche 1, beträgt der Winkel a1 der ersten Drehfläche 1 in einem ersten und zweiten Quadranten der Kreisbewegung der Drehfläche 1 oder der Drehbewehung der Rotationsvorrichtung um die zentrale Achse M, also zwischen 0 ° und 180 °, konstant - 10 °. Beim Durchgang der Drehfläche 1 durch den Wendepunkt bei 180 ° wechselt der Winkel a1 auf + 10 ° zur Strömungsrichtung S. Dieser positive Winkel wird dann konstant während dem gesamten dritten und vierten Quadranten der Kreisbewegung, also zwischen 180 ° und 360 ° (= 0 °) beibehalten. Beim Durchgang durch 0 ° wechselt der Winkel a1 dann wieder auf - 10 °. Eine entsprechende Winkeleinstellung des Winkels a2 der Drehfläche 2 wird um 180 ° versetzt zur Drehfläche 1 synchron durchgeführt. Wie Fig. 2 verdeutlicht, erzeugen die beiden Drehflächen 1 und 2 somit ein gleichmäßiges, positives Drehmoment DM im wesentlichen entlang Ihrer Kreisbewegung mit der Ausnahme der neutralen Stellungen bei 0° und 180 °, in denen das Drehmoment DM verschwindet bzw. null ist.

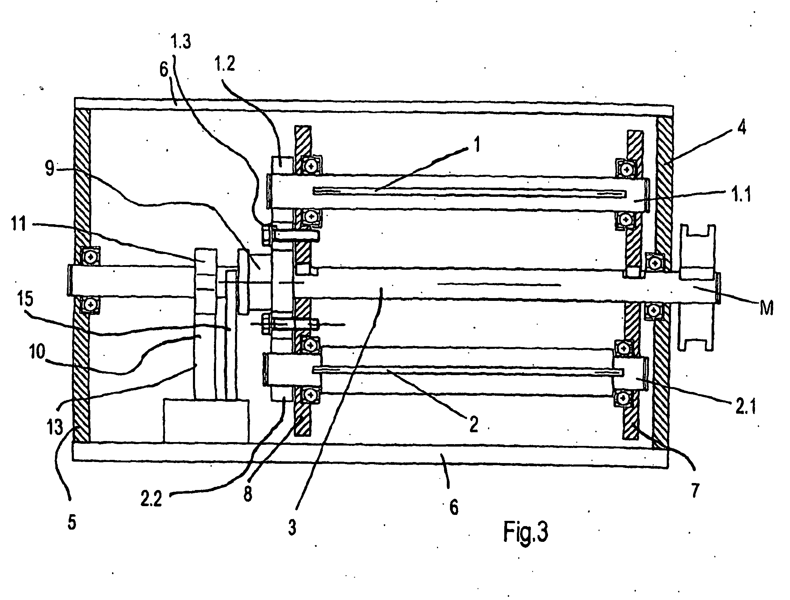

Gemäß Fig. 3 ist eine Hauptdreheinrichtung 3 bzw. ein Hauptdrehkörper der Rotationsvorrichtung zwischen bzw. in zwei- oder mehreren stationären, miteinander durch Stege 6 verbundene Stützwangen 4 und 5 drehbar um ihre zentrale Drehachse M gelagert. Die Hauptdreheinrichtung 3 wird seitlich durch eine oder mehrere kreisflächige, zueinander beabstandete Rotationswangen 7 und 8 begrenzt, die mit der zentralen Drehachse M starr verbunden sind. In den Rotationswangen 7 und 8 sind eine Drehflächenachse 1.1 der Drehfläche 1 und eine Drehflächenachse 2.1 der Drehfläche 2 drehbar gelagert. Die Drehflächenachsen 1.1 und 2.1 sind parallel und mit Abstand zu der zentralen Drehachse M angeordnet und befinden sich eher an den Rändern der scheibenförmigen Rotationswangen 7 und 8.

Auf den Verlängerungen der Drehflächenachsen 1.1 und 2.1 sitzt ein Drehachsenzahnrad 1.2 bzw. ein Drehachsenzahnrad 2.2, die starr oder fest mit der zugeordneten Drehachse verbunden sind. Als Funktionsbeispiel soll hier in der ersten Ausführungsform der Erfindung eine Untersetzung mit Zahnrädern dienen. Die Drehachsenzahnräder 1.2 und 2.2 sind jeweils über ein Zwischenzahnrad 1.3 mit einem Zentralachsenzahnrad 9 oder einem Pendelzahnrad, das drehbar auf der Zentralachse M sitzt und eine Relativbewegung zu der Zentralachse M ausführen kann, im Verhältnis 1:1 gekoppelt. Das Zentralachsenzahnrad 9 auf der zentralen Drehachse M ist somit nicht mit der Drehachse M in radialer Richtung starr verbunden.

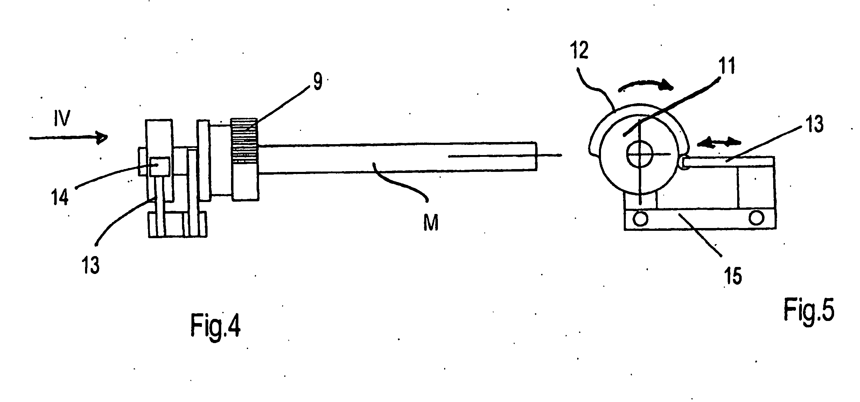

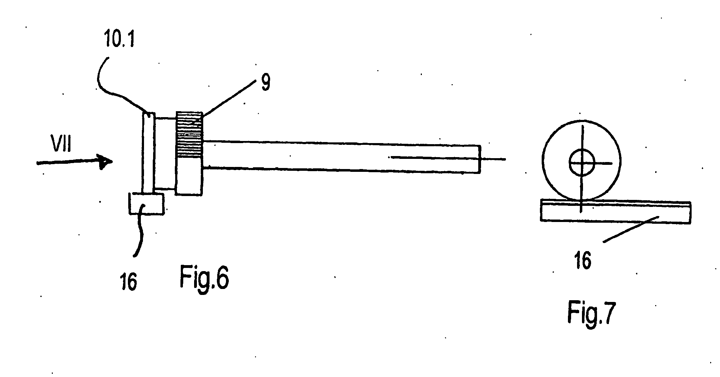

Eine Verstellung, Drehung oder radiale Lage des Zentralachsenzahnrads 9 wird durch eine Stelleinrichtung 10 oder Steuereinrichtung der Rotationsvorrichtung bestimmt. Die Stelleinrichtung 10 ist über das Zentralachsenzahnrad 9, die Zwischenzahnräder 1.3 und Drehachsenzahnräder 1.1 bzw. 2.1 als Antrieb mit den Drehflächen 1 bzw. 2 gekoppelt, um deren Winkelstellung a1 bzw. a2 bezüglich der Strömungsrichtung S des Fluids einstellen zu können. Diese Verstellbewegung der Drehflächen 1 und 2 kann durch eine Pendelbewegung bzw. Hin-und-Her-Bewegung des Zentralachsenzahnrads 9 durch z.B. ein mechanisches Kurvenelement (vgl. Fig. 4 und Fig. 5) oder durch einen elektrischen Antrieb 8vgl. Fig. 6 und 7) erzeugt werden. In der ersten Ausführungsform hat die Stelleinrichtung 10 eine Steuerkurve 11 mit einem Steuernocken 12, wobei die Steuerkurve 11 starr mit der zentralen Drehachse M verbunden ist. Weiterhin hat die Stelleinrichtung 10 eine hin-und-her bewegbare Pendelstange 13 mit einer Pendelrolle 14, die die Steuerkurve 11 abtastet. Der Steuernocken 12 stellt einen Vorsprung dar, der einem Drehabschnitt von 180 ° entspricht. Die Bewegung der Steuerkurve 11 wird über die Pendelstange 13 und ein Schubgestänge 15 auf das Zentralachsenzahnrad 9 übertragen, wodurch die Winkelauslenkungsbewegung der Drehflächen 1 und 2 synchron gesteuert wird.

In Fig. 6 und 7 ist eine alternative Stelleinrichtung 10.1 gezeigt, die mit einem elektrischen oder elektromotorischen Antrieb arbeitet, der mit dem Zentralachsenzahnrad 9 gekoppelt ist.

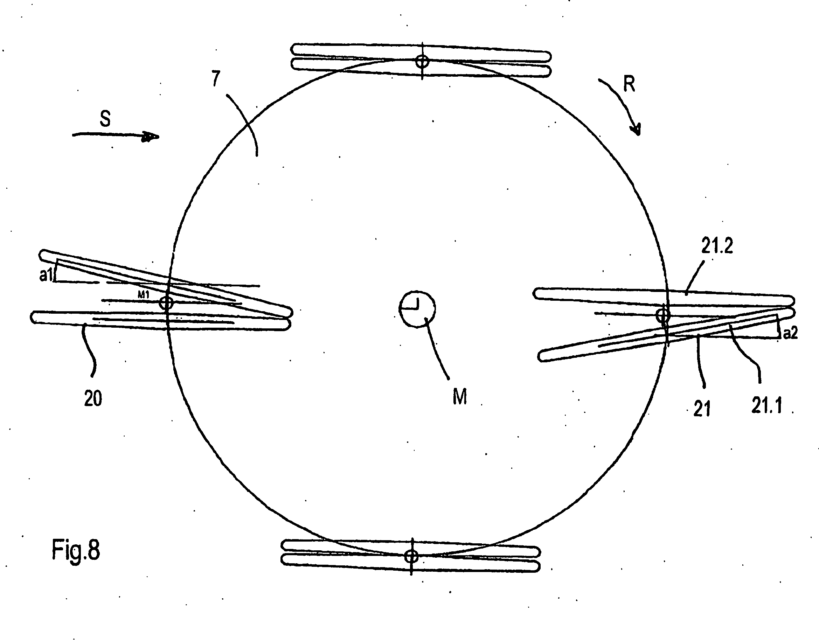

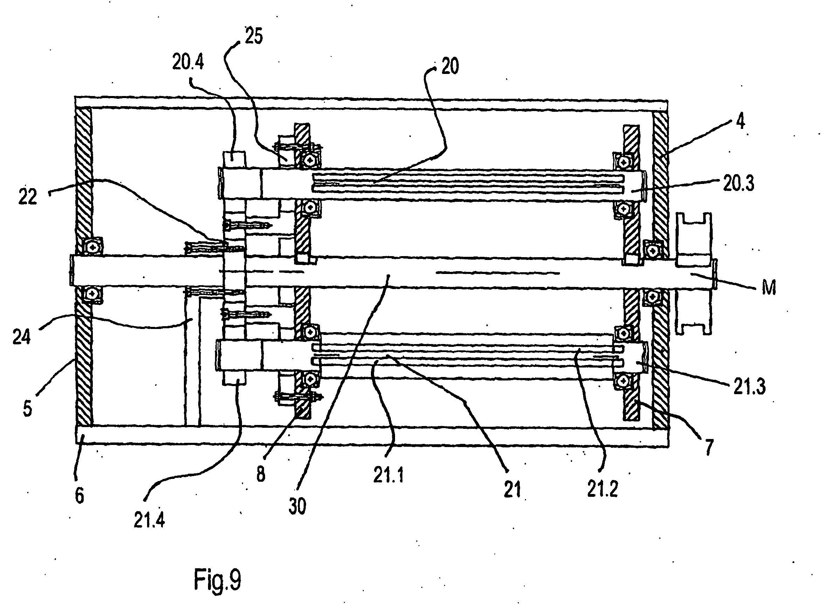

In Fig. 8 bis Fig. 13 ist eine weitere, zweite beispielhafte Ausführungsform der Rotationsvorrichtung der Erfindung mit zwei formveränderbaren Drehflächen 20 und 21 gezeigt. Der wesentliche Unterschied zur ersten Ausführungsform von Fig. 3 besteht darin, dass in Fig. 9 die Drehflächen 20 und 21 in ihrer Form veränderbar ausgelegt sind, um eine optimale Anströmung der Drehflächen durch das Fluid zu ermöglichen.

Genauer sind die Drehflächen 20 und 21 jeweils mit zwei miteinander gekoppelten, getrennt voneinander auslenkbaren, z.B. rechteckigen, abgerundeten Blättern 21.1 und 21.2 aufgebaut. In einem Bereich zwischen 0 ° und 180 ° ( = 0 °) der Kreisbewegung der gezeigten Dreheinrichtung 30 der Rotationsvorrichtung wird das Blatt 21.1 um einen Winkel von z.B. konstant - 10 ° aus seiner parallelen Lage ausgelenkt, während das Blatt 21.2 parallel ausgerichtet bleibt. In einem Bereich der Kreisbewegung zwischen 180 ° und 360 ° (= 0 °) wird dagegen das Blatt 21.1 konstant parallel gehalten, während das Blatt 21.2 nun um einen Winkel von z.B. + 10 ° konstant gegenüber der Strömungsrichtung S des Fluids ausgelenkt wird. In den neutralen stellungen von 0 ° und 180 ° sind die beiden Blätter 21.1 und 21.2 parallel zueinander ausgerichtet und parallel zur Strömungsrichtung S.

Gemäß Fig. 9 ist die Hauptdreheinrichtung 30 zwischen bzw. in zwei- oder mehreren stationären, miteinander durch Stege 6 verbundene Stützwangen 4 und 5 drehbar um ihre zentrale Drehachse M gelagert. Die Hauptdreheinrichtung 30 wird seitlich durch eine oder mehrere z.B. kreisflächige, zueinander beabstandete Rotationswangen 7 und 8 begrenzt, die mit der zentralen Drehachse M starr verbunden sind. In den Rotations-wangen 7 und 8 sind eine Drehflächenachse 20.3 der Drehfläche 20 und eine Drehflächenachse 21.3 der Drehfläche 21 drehbar gelagert. Die Drehflächenachsen 20.3 und 21.1 sind parallel und mit Abstand zu der zentralen Drehachse M angeordnet und befinden sich eher an den Rändern der scheibenförmigen Rotationswangen 7 und 8.

Auf den Verlängerungen der Drehflächenachsen 20.3 und 21.3 sitzt ein Drehachsenzahnrad 20.4 bzw. eine Drehachsenzahnrad 21.4, die starr oder fest mit der zugeordneten Drehachse verbunden sind. Als Funktionsbeispiel soll hier in der ersten Ausführungsform der Erfindung eine Untersetzung mit Zahnrädern dienen. Die Drehachsenzahnräder 20.4 und 21.4 sind jeweils über ein Zwischenzahnrad mit einem Zentralachsenzahnrad 22, in dem sich die Zentralachse M drehen kann und das stationär fest über eine Verbindung 24 mit den Stützwangen 5 und 7 verbunden ist, im Verhältnis 1:1 gekoppelt.

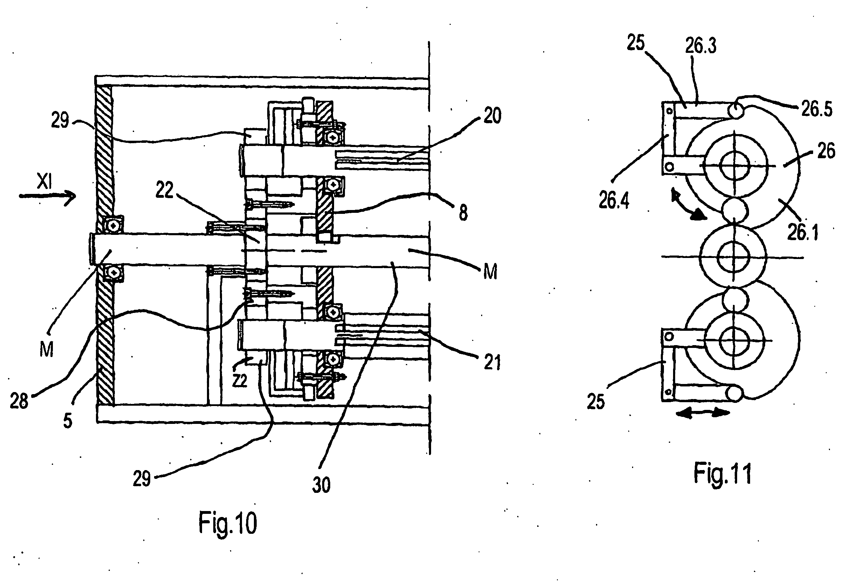

Für die Auslenkung der einzelnen Blätter 21.1 und 21. 2 der formveränderbaren Drehfläche 21 ist eine Stelleinrichtung 25 auf jeder der Drehflächenachsen 20.3 und 21.3 vorgesehen. Jede der Stelleinrichtungen 25 hat wie Fig. 10, Fig. 11 und Fig. 12 zeigen eine Steuerkurve 26 mit einem ausgebildeten Steuernocken 26.1 über 180 °, einer Pendelstange 26.3, einer Pendelrolle 26.5 an der Pendelstange 26.3, einem Schubgestänge 26.4 und einem Blattantrieb 26.6, der über ein Gestänge 26.7 mit dem Blatt 21.1 der Drehfläche 21 gekoppelt ist, um diese Blatt 21.1 auszulenken. Eine ähnliches Schubgestänge ist zur Auslenkung des Blatts 21.1 der Drehfläche 21 vorgesehen.

Steuernocken 26.1 innerhalb des rotierenden Systems können die Drehflächen 20 und 21 direkt auf den gewünschten Winkel einstellen oder Flächen, die in ihrem Querschnitt veränderbar sind, sind allgemein so zu verstellen, dass der wirksamste Auftrieb erzeugt wird.

Auch in dieser zweiten Ausführungsform ist die Untersetzung der Drehflächenachsen 20.3 und 21.3 zur Hauptachse M im Verhältnis 1:1 mit Zwischenrad zur Drehrichtungsumkehr der Drehflächen 20.3 und 22.3 gegeben. Die Untersetzung gewährleistet, dass die Auslenkung der Drehflächen 20.3 und 21.3 im jeweils ersten und zweiten, sowie im dritten und vierten Quadranten nicht verändert wird.

Die Pendelbewegung der Drehflächen 20.3, 21.3 bzw. ihrer Blätter 21.1 und 21.2 wird bei Einsatz der Steuerkurve 26 am Rotationskörper durch Drehflächenachsen 20.3 und 21.3 mit jeweils einer Hülse 21.31 ausgeführt. Die Steuerkurve 26 oder das Schubgestänge 26.4 sind jeweils getrennt mit dem Untersetzungsgetriebe und der Drehflächenachse verbunden oder umgekehrt.

Die Zwischenzahnräder 28 sind an der Rotationswange 8 gelagert. Die Drehachsenzahnräder 29, sind starr mit den Drehachsen 20.3 und 21.3 verbunden. Genauer sind Drehflächenachsen 20.3 und 21.3 zweigeteilt und haben eine innere Hauptachse 21.33 und die äußere Achsenhülse 21.31.

Das Schubgestänge 26.4 ist mit der Pendelstange 26.3 am Drehachsenzahnrad 29 befestigt und rotiert wie das Zahnrad 29 im Verhältnis 1:1 zu dem Zentralachsenzahnrad 22. Die Pendelstange 26.3 zusammen mit der Rolle 26.5 bewegt sich dabei auf der Steuerkurve 26 und macht bei 0 Grad und 180 Grad jeweils eine positive und eine negative Hubbewegung, die über das Schubgestänge 26.4 auf die Hülse 21.31 der Drehflächenachse und die Blätter 21.1 und 21. 2 der Drehfläche übertragen wird, um den gewünschten, günstigsten Auftriebswinkel einzustellen.

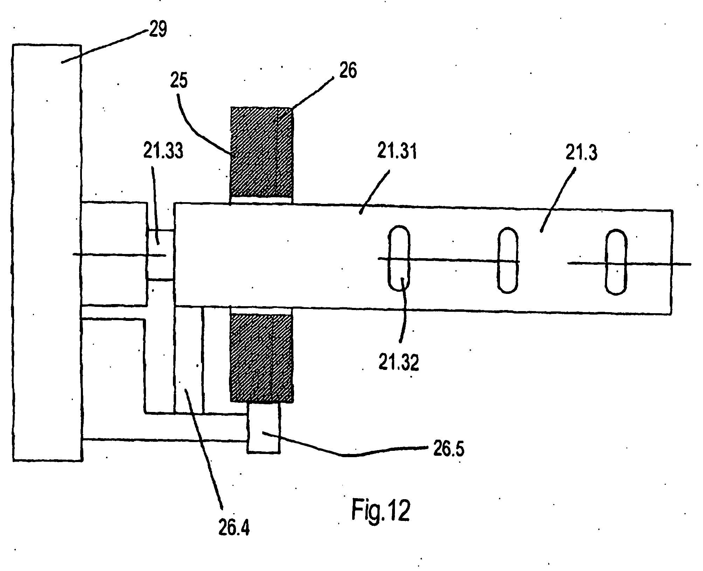

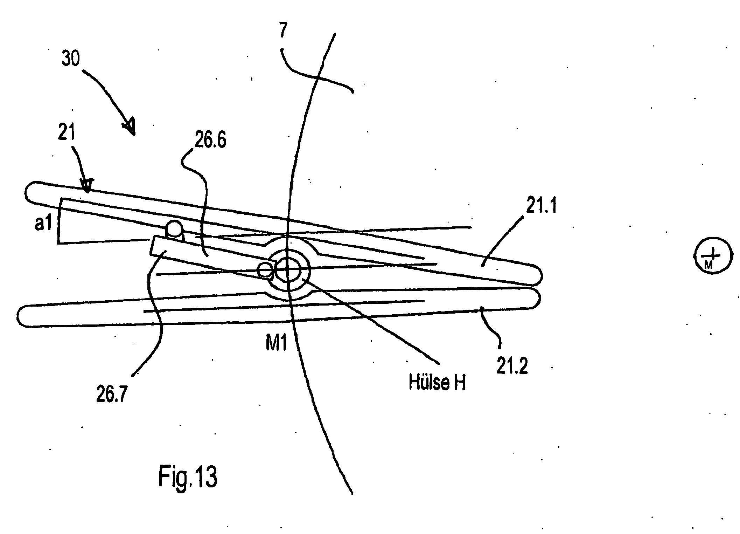

Langlöcher 21.32 oder andere Öffnungen stellen eine Verbindung zur Hauptachse 21.33 her, die ermöglicht, die neutrale Lage der Hauptachse 21.33 als Referenzpunkt für die Verstellung der Blätter bzw. Drehflächen zu nutzen. Bei Verdrehung der Achsenhülse 21.3 durch das vorgenannte Schubgestänge 26.4 in Verbindung mit der Steuerkurve 26.1 und der Pendelrolle 26.3, 26.5 dreht ein Stellhebel des Blattantriebs 26.6 (vgl. Fig. 13) die Oberseite bzw. das Blatt 21.1 der Drehfläche 21 in den gewünschten Auftriebswinkel. Analog hierzu wird auf der Gegenseite (vgl. Fig. 12) auch die Unterseite bzw. das Blatt 21.2 durch einen Stellhebel in den gewünschten Auftriebswinkel gebracht. Das Zurückstellen der Blätter 21.1 und 21.2 nach einer halben Umdrehung des Rotationskörpers kann durch Federkraft oder über die Achsenhülse 21.3 und einen Verstellhebel erfolgen.

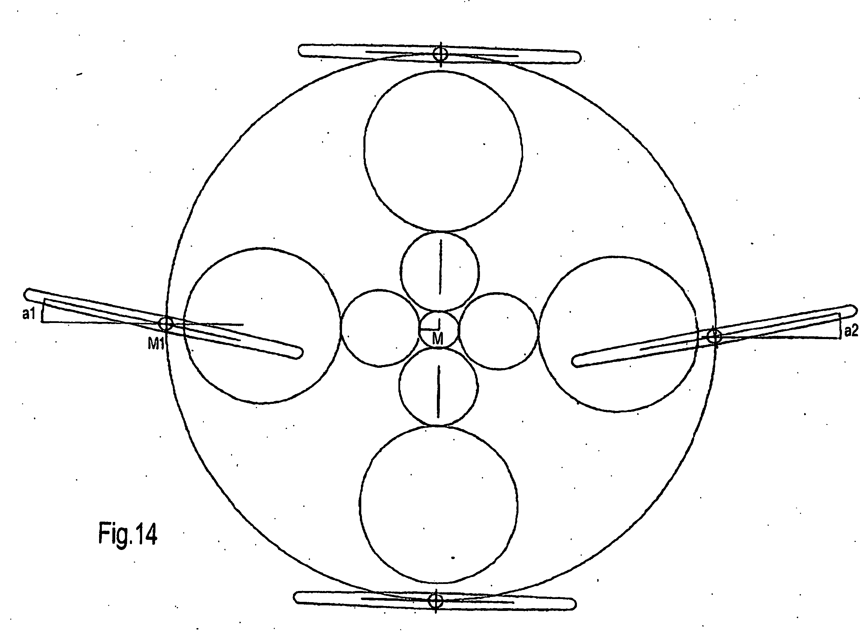

Fig. 14 ist eine schematische Draufsicht einer weiteren, dritte Ausführungsform der Rotationsvorrichtung der Erfindung, die mit vier bewegungssynchronisierten Drehflächen versehen ist.

Auch hier stellt eine ungleichförmige Untersetzung, mechanisch oder elektrisch betrieben, die Rotationsflächen auf den ersten 180 Grad der Bewegung um M in einen strömungsgünstigen Winkel von z.B. 10-12 Grad, der eigentlichen Untersetzung voreilend, und auf den zweiten 180 Grad wieder in einen strömungsgünstigen Winkel von z.B. 10 - 12 Grad nacheilend. Die ungleichförmige Untersetzung in den Quadranten z.B. drei und vier lässt die Rotationsfläche um den Winkel von z.B. 10 Grad voreilen und in den Quadranten eins und zwei um den Winkel a2 z.B 10 Grad nacheilen. Dadurch wird ermöglicht dass die Rotationsfläche auf einem großen Anteil des Drehwinkels bei einer Umdrehung um M in einem günstigen Wirkwinkel zur anströmenden wie zur abströmenden Masse steht.

## Patentansprüche

1. Rotationsvorrichtung zur Verwendung in einem Fluid, um Energie aus der Strömungsbewegung eines Fluids zu gewinnen oder um Energie in eine Bewegung eines Fluids umzuwandeln, wobei die Rotationsvorrichtung aufweist:
mindestens zwei stationäre Stützwangen (4, 5);
eine Zentralachse (M);
eine Hauptdreheinrichtung (3; 30), die mindestens zwei, zueinander beabstandete Rotationswangen (7, 8) hat, die mit der Zentralachse (M) starr verbunden sind, mindestens zwei Drehflächen (1, 2; 20, 21), die jeweils drehbar um eine Drehflächenachse (1.1, 2.1; 20.3, 21.3) mit Abstand zu der Zentralachse (M) derart mit der Hauptdreheinrichtung (3) gekoppelt sind, dass die Hauptdreheinrichtung (3) durch die Drehflächen (1, 2) eine Drehbewegung um die Zentralachse (M) ausführen kann, wobei sich die Drehflächenachsen parallel zu der Zentralachse (M) der Hauptdreheinrichtung (3) erstrecken und in den Rotationswangen (7, 8) gelagert sind,
eine Stelleinrichtung (10), die die Winkel oder Neigungen der Drehflächen (1, 2) zu einer Strömungsrichtung (S) des Fluids einstellt, und
ein Pendelsteuerrad (9), das mit der Stelleinrichtung (10) gekoppelt und um die Zentralachse (M) herum frei drehbar angordnet ist,
**dadurch gekennzeichnet,**
**dass** sich die Drehflächenachsen (1.1, 2.1; 20.3, 21.3) zwischen den Rotationswangen (7, 8) erstrecken;
**dass** sich die Zentralachse (M) zwischen den Stützwangen (4, 5), die miteinander durch mehrere Stege (6) verbunden sind,
und den Rotationswangen (7, 8) erstreckt,
und
**dass** das Pendelsteuerrad (9) derart mit den mindestens zwei Drehflächen (1, 2) gekoppelt ist, dass seine Drehbewegung auf die Drehflächen zum Einstellen der Winkel oder Neigungen der Drehflächen (1, 2) zu der Strömungsrichtung (S) des Fluids synchron übertragen wird.

2. Rotationsvorrichtung nach Anspruch 1, **dadurch gekennzeichnet, dass** auf der einen Drehflächenachse (1.1, 2.1) ein Drehachsenzahnrad (1.2) und auf der anderen Drehflächenachse (2.1) ein Drehachsenzahnrad (2.2) sitzt, die jeweils starr oder fest mit der zugeordneten Drehachse verbunden sind; und
dass die Drehachsenzahnräder (1.2, 2.2) jeweils über ein Zwischenzahnrad (1.3) mit einem Pendelzahnrad als Pendelsteuerrad (9) gekoppelt sind.

3. Rotationsvorrichtung nach Anspruch 2, **dadurch gekennzeichnet, dass** die Drehachsenzahnräder (1.2, 2.2) über die Zwischenzahnräder (1.3) mit dem Pendelzahnrad (9) mit einem Übersetzungsverhältnis 1:1 gekoppelt sind.

4. Rotationsvorrichtung nach Anspruch 2 oder Anspruch 3, **dadurch gekennzeichnet, dass** die Stelleinrichtung (10) über das Pendelzahnrad (9), die beiden Zwischenzahnräder (1.3) und die Drehachsenzahnräder (1.1, 2.1) als Antrieb mit den beiden Drehflächen (1, 2) zum Einstellen deren Winkelstellung oder Neigung (a1, a2) bezüglich der Strömungsrichtung (S) des Fluids gekoppelt ist.

5. Rotationsvorrichtung nach einem der vorstehenden Ansprüche, **dadurch gekennzeichnet, dass** die Stelleinrichtung (10) ein mechanisches Kurvenelement oder einen elektrischen Antrieb zum Erzeugen einer Pendelbewegung oder Hin-und-Her-Bewegung des Pendelzahnrads (9) hat.

6. Rotationsvorrichtung nach Anspruch 5, **dadurch gekennzeichnet, dass** die Stelleinrichtung (10) aufweist:
eine Steuerkurve (11) mit einem Steuernocken (12), wobei die Steuerkurve (11) starr mit der Zentralachse (M) verbunden ist;
eine hin-und-her bewegbare Pendelstange (13) mit einer Pendelrolle (14), die die Steuerkurve (11) abtastet, und
ein Schubgestänge (15), das mit der Pendelstange (13) und dem Pendelzahnrad (9) zum Übertragen einer Bewegung der Steuerkurve (11) über die Pendelstange 13 und das Schubgestänge 15 auf das Pendelzahnrad (9) gekoppelt ist, um die Winkelauslenkungsbewegung der Drehflächen (1, 2) synchron zu steuern.

7. Rotationsvorrichtung nach einem der vorstehenden Ansprüche, **gekennzeichnet durch** eine Neigung der Drehflächen (1, 2) in einem Bereich von - 25 ° bis 25 ° zur Strömungsrichtung (S) des Fluids.

8. Rotationsvorrichtung nach einem der vorstehenden Ansprüche, **dadurch gekennzeichnet, dass** die Stelleinrichtung (10) den Winkel der jeweiligen Drehfläche über 0 °bis 180° der Drehbewegung der Hauptdreheinrichtung auf einen ersten, konstanten, positiven Winkel einstellt und dass die Stelleinrichtung (10) den Winkel der Drehfläche über 180 ° bis 360 ° der Drehbewegung der Hauptdreheinrichtung (3) auf einen zweiten, konstanten, negativen Winkel zur Strömungsrichtung des Fluids einstellt, wobei die Winkel den gleichen Wert mit umgekehrten Vorzeichen bezüglich der Strömungsrichtung (S) des Fluids haben.

9. Rotationsvorrichtung nach einem der vorstehenden Ansprüche, **dadurch gekennzeichnet, dass** die Stelleinrichtung (10) eine neutrale Stellung der jeweiligen Drehfläche bezüglich der Strömungsrichtung (S) einstellt, in der die Drehfläche auf die Hauptdreheinrichtung (3) kein Drehmoment ausübt.

10. Rotationsvorrichtung nach Anspruch 1, **dadurch gekennzeichnet, dass** die mindestens zwei Drehflächen (20, 21) formveränderbar sind und dass die Drehflächen (20, 21) jeweils zwei
miteinander gekoppelte, getrennt voneinander auslenkbare Blätter (21.1, 21.2) haben.

11. Rotationsvorrichtung nach Anspruch 10, **dadurch gekennzeichnet, dass** in einem Bereich zwischen 0 ° und 180 ° ( = 0 °) der Kreisbewegung der Dreheinrichtung (30) das Blatt (21.1) einer Drehfläche (20, 21) um einen konstanten Winkel aus seiner parallelen Lage ausgelenkt ist, während das andere Blatt (21.2) der Drehfläche parallel ausgerichtet bleibt, und
dass in einem Bereich der Kreisbewegung zwischen 180 ° und 360 ° (= 0 °) dagegen das Blatt (21.1) konstant parallel gehalten ist, während das andere Blatt (21.2) um einen konstanten Winkel gegenüber der Strömungsrichtung (S) des Fluids ausgelenkt ist, und
dass in den neutralen Stellungen von 0 ° und 180 ° die beiden Blätter (21.1, 21.2) der jeweiligen Drehfläche parallel zueinander ausgerichtet und parallel zur Strömungsrichtung (S) des Fluids sind.

12. Rotationsvorrichtung nach Anspruch 10 oder Anspruch 11, **dadurch gekennzeichnet, dass** auf den Drehflächenachsen (20.3, 21.3) ein Drehachsenzahnrad (20.4) bzw. ein (Drehachsenzahnrad (21.4 ) sitzt, die starr oder fest mit der zugeordneten Drehachse verbunden sind, und
dass die Drehachsenzahnräder (20.4, 21.4) jeweils über ein Zwischenzahnrad mit einem Zentralachsenzahnrad (22), in dem sich die Zentralachse (M) drehen kann und das stationär fest über eine Verbindung (24) mit den Stützwangen (5, 7) verbunden ist, im Verhältnis 1:1 gekoppelt sind.

13. Rotationsvorrichtung nach einem der Ansprüche 10 bis 12, **dadurch gekennzeichnet, dass** für die Auslenkung der einzelnen Blätter (21.1, 21.2) der formveränderbaren Drehfläche (21) eine Stelleinrichtung (25) auf jeder der Drehflächenachsen (20.3, 21.3) vorgesehen ist.

14. Rotationsvorrichtung nach Anspruch 13, **dadurch gekennzeichnet, dass** die Stelleinrichtung (25) eine Steuerkurve (26) mit einem ausgebildeten Steuernocken (26.1) über 180 °, eine Pendelstange (26.3), eine Pendelrolle (26.5) an der Pendelstange (26.3), ein Schubgestänge (26.4) und einen Blattantrieb (26.6) hat, der über ein Gestänge (26.7) mit dem Blatt (21.1) der Drehfläche (21) zum Auslenken des Blatts (21.1) gekoppelt ist.

15. Rotationsvorrichtung nach Anspruch 14, **dadurch gekennzeichnet, dass** die Drehflächenachsen (20.3, 21.3) jeweils zweigeteilt sind und jeweils eine innere Hauptachse (21.33) und eine äußere Achsenhülse (21.31) haben und dass Langlöcher (21.32) oder andere Öffnungen in der Achsenhülse (21.31) für einen Referenzpunkt zum Verstellen der Blätter bzw. Drehflächen vorgesehen sind.

## Claims

1. Rotational device for use in a fluid and for extracting energy from the moving stream of a fluid or for converting energy into motion of a fluid, the rotational device comprising:
two or more stationary supporting cheeks (4, 5);
a central rotary shaft (M);
main rotating means (3; 30) comprising one or more rotational cheeks (7, 8) spaced away from each other and rigidly connected to the central rotary shaft (M), one or more rotational surfaces (1, 2; 20, 21) each coupled rotatable about a rotational surface rotary shaft (1.1, 2.1; 20.3, 21.3) spaced away from the central rotary shaft (M) to the main rotating means (3) such that the main rotating means (3) can execute by the rotational surfaces (1, 2) a rotational motion about the central rotary shaft (M), the rotational surfaces rotary shafts extending parallel to the central rotary shaft (M) of the main rotating means (3) and being mounted in the rotational cheeks (7, 8), adjusting means (10) adjusting the angles or inclinations of the rotational surfaces (1, 2) to a flowing direction (S) of the fluid, and
a pivoting control wheel (9) coupled to the adjusting means (10) and arranged to rotate freely about the central rotary shaft (M),
**characterized in that**
the rotational surface rotary shafts (1.1, 2.1; 20.3, 21.3) extending between the rotational cheeks (7, 8);
the central rotary shaft (M) extending between the supporting cheeks (4, 5) that are interconnected by bars (6), and the rotational cheeks (7, 8), and
the pivoting control wheel (9) is coupled to the one or more rotational surfaces (1, 2) such that its rotational motion is transferred to the rotational surfaces to adjust the angles or inclinations of the rotational surfaces (1, 2) relative to the flowing direction (S) of the fluid synchronously.

2. Rotational device as set forth in claim 1, **characterized in that** a rotary shaft gear (1.2) is mounted on a rotational surface rotary shaft (1.1, 2.1) and a rotary shaft gear (2.2) is mounted on the other rotational surface rotary shaft (2.1), the rotary shaft gears are rigidly or fixedly connected to their rotational surface rotary shafts, and that each rotary shaft gear (1.2, 2.2) is coupled via an adapter gear (1.3) to a pivoting gear as the pivoting control wheel (9).

3. Rotational device as set forth in claim 2, **characterized in that** the rotary shaft gears (1.2, 2.2) are coupled via the adapter gears (1.3) to the pivoting gear (9) in the transmission ratio 1:1.

4. Rotational device as set forth in claim 2 or claim 3, **characterized in that** the adjusting means (10) is coupled via the pivoting gear (9), both of the adapter gears (1.3), and rotary shaft gears (1.1, 2.1) as drive to both of the rotational surfaces (1, 2) to adjust their angle or inclination (a1, a2) relative to the flowing direction (S) of the fluid.

5. Rotational device as set forth in any of the preceding claims, **characterized in that** the adjusting means (10) has a mechanical curve device or electric drive for generating a pivoting motion or reciprocating motion of the pivoting gear (9).

6. Rotational device as set forth in claim 5, **characterized in that** the adjusting means (10) comprising:
a controlling curve (11) with a controlling cam (12), the controlling curve (11) being rigidly connected to the central rotary shaft (M);
a pivoting rod (13) with a pivoting roller (14) which follows the controlling curve (11);
a thrust link (15) coupled to the pivoting rod (13) and the pivoting gear (9) for transferring of a motion of the controlling curve (11) via the pivoting rod (13) and the thrust link (15) to the pivoting gear (9) to control the angle motion of the rotational surfaces (1, 2) synchronously.

7. Rotational device as set forth in any of the preceding claims, **characterized by** an inclination of the rotational surfaces (1, 2) in a range - 25° to 25° relative to the flowing direction (S) of the fluid.

8. Rotational device as set forth in any of the preceding claims, **characterized in that** the adjusting means (10) adjusts the angle of the respective rotational surface through 0° to 180° of the rotational motion of the main rotating means to a first, constant positive angle and that the adjusting means (10) adjusts the angle of the rotational surface through 180° to 360° of the rotational motion of the main rotating means (3) to a second, constant negative angle relative to the flowing direction of the fluid, the angles having the same value with reversed sign relative to the flowing direction (S) of the fluid.

9. Rotational device as set forth in any of the preceding claims, **characterized in that** the adjusting means (10) set a neutral position of the rotational surface relative to the flowing direction (S) of the fluid in which the rotational surface does not exert any rotational torque on the main rotating means (3).

10. Rotational device as set forth in claim 1, **characterized in that** the two or more rotational surfaces (20, 21) are configured shape-alterable and that each rotational surface (20, 21) has two blades (21.1, 21.2) that are coupled to each other and each of which can be pitched separately from the other.

11. Rotational device as set forth in claim 10, **characterized in that** in a range from 0° to 180 ° (= 0°) of the circular motion of the main rotational means (30) the blade (21.1) of a rotational surface (20, 21) is pitched by an angle of e.g. 10° constant from its parallel position whilst the other blade (21.2) of the rotational surface remains oriented parallel, and that in a range of the circular motion from 180° to 360° (= 0°) the blade (21.1) is maintained constantly parallel whilst the other blade (21.2) is pitched by an constant angle relative to the flowing direction (S) of the fluid stream, and that in the neutral positions of 0° and 180° the two blades (21.1, 21.2) are oriented parallel to each other and parallel to the flowing direction (S) of the fluid.

12. Rotational device as set forth in claim 10 or claim 11, **characterized in that** a rotary shaft gear (20.4) and rotary shaft gear (21.4), respectively, are seated on the rotational surface rotary shafts (20.3, 21.3) which are rigidly or fixedly connected to their rotational surface rotary shafts, and that the rotary shaft gears (20.4, 21.4) are respectively coupled in the ratio 1:1 via an adapter gear to a central rotary shaft gear (22) in which the central rotary shaft (M) can rotate and which is stationary fixedly connected by a connection (24) to the supporting cheeks (5, 7).

13. Rotational device as set forth in any of the claims 10 to 12, **characterized in that** adjusting means (25) is provided on each rotational surface rotary shaft (20.3, 21.3) for pitching each blade (21.1, 21.2) of the shape-alterable rotational surface (21).

14. Rotational device as set forth in claim 13, **characterized in that** each adjusting means (25) comprises a controlling curve (26) with a formed cam (26.1) across 180°, a pivoting rod (26.3), a pivoting roller (26.5) at the pivoting rod (26.3), a thrust link (26.4), and a blade drive (26.6) coupled by a linkage (26.7) to the blade (21.1) of the rotational surface (21) for pitching this blade (21.1).

15. Rotational device as set forth in claim 14, **characterized in that** each rotational surface rotary shaft (20.3, 21.3) is split in two in featuring an inner main shaft (21.33) and an outer shaft sleeve (21.31) and that slotted holes (21.32) or other openings in the outer shaft sleeve (21.31) are provided for a reference point for pitching the blades or rotational surfaces.

## Revendications

1. Dispositif de mise en rotation à utiliser dans un fluide, pour obtenir de l'énergie à partir du mouvement d'écoulement d'un fluide ou bien pour transformer de l'énergie en un mouvement d'un fluide, le dispositif de mise en rotation présentant :
au moins deux joues de support stationnaires (4, 5) ;
un axe central (M) ;
un dispositif rotatif principal (3 ; 30) possédant au moins deux joues de mise en rotation (7, 8) à l'écart l'une de l'autre qui sont reliées à demeure à l'axe central (M) ;
au moins deux surfaces rotatives (1, 2 ; 20, 21) qui sont couplées respectivement en rotation autour d'un axe de surface rotative (1.1, 2.1 ; 20.3, 21.3) à une certaine distance de l'axe central (M) au dispositif rotatif principal (3) de telle sorte que le dispositif rotatif principal (3) peut effectuer, via les surfaces rotatives (1, 2) un mouvement de rotation autour de l'axe central (M), les axes des surfaces rotatives s'étendant parallèlement à l'axe central (M) du dispositif rotatif principal (3) et étant montés dans les joues de mise en rotation (7, 8) ;
un mécanisme de réglage (10) qui règle les angles ou les inclinaisons des surfaces rotatives (1, 2) par rapport à une direction d'écoulement (S) du fluide ; et
une roue de commande oscillante (9) qui est couplée au mécanisme de réglage (10) et qui est disposée en rotation libre autour de l'axe central (M) ;
**caractérisé**
**en ce que** les axes des surfaces rotatives (1.1, 2.1 ; 20.3, 21.3) s'étendent entre les joues de mise en rotation (7, 8) ;
**en ce que** l'axe central (M) s'étend entre les joues de support (4, 5), qui sont reliées l'une à l'autre via plusieurs traverses (6), et les joues de mise en rotation (7, 8) ; et
**en ce que** la roue de commande oscillante (9) est couplée auxdites au moins deux surfaces rotatives (1, 2) de telle sorte que son mouvement de rotation se transmet de manière synchrone aux surfaces rotatives pour le réglage des angles ou des inclinaisons des surfaces rotatives (1, 2) par rapport à la direction d'écoulement (S) du fluide.

2. Dispositif de mise en rotation selon la revendication 1, **caractérisé en ce qu'**une roue dentée (1.2) à axe rotatif vient s'appuyer sur le premier axe de surface rotative (1.1, 2.1) et une roue dentée (2.2) à axe rotatif vient s'appuyer sur l'autre axe de surface rotative (2.1), qui sont respectivement reliées à demeure ou solidement à l'axe rotatif correspondant ;
et
**en ce que** les roues dentées (1.2, 2.2) à axe rotatif sont couplées respectivement via une roue dentée intermédiaire (1.3) à une roue dentée oscillante sous la forme d'une roue de commande oscillante (9).

3. Dispositif de mise en rotation selon la revendication 2, **caractérisé en ce que** les roues dentées (1.2, 2.2) à axe rotatif sont couplées via les roues dentées intermédiaires (1.3) à la roue dentée oscillante (9) avec un rapport de transmission égal à 1:1.

4. Dispositif de mise en rotation selon la revendication 2 ou 3, **caractérisé en ce que** le mécanisme de réglage (10) est couplé via la roue dentée oscillante (9), les deux roues dentées intermédiaires (1.3) et les roues dentées (1.1, 2.1) à axe rotatif à titre d'entraînement aux deux surfaces rotatives (1, 2) pour le réglage de leur position angulaire ou de leur inclinaison (a1, a2) par rapport à la direction d'écoulement (S) du fluide.

5. Dispositif de mise en rotation selon l'une quelconque des revendications précédentes, **caractérisé en ce que** le mécanisme de réglage (10) possède un élément mécanique à cames ou un entraînement électrique pour générer un mouvement oscillant ou un mouvement alternatif de la roue dentée oscillante (9).

6. Dispositif de mise en rotation selon la revendication 5, **caractérisé en ce que** le mécanisme de réglage (10) présente :
une came de commande (11) comprenant une came radiale (12), la came de commande (11) étant reliée à demeure à l'axe central (M) ;
une barre oscillante (13) à mobilité alternative comprenant un palier à rotule (14) qui balaie la came de commande (11) ;
une tige de poussée (15) qui est couplée à la barre oscillante (13) et à la roue dentée oscillante (9) pour transmettre un mouvement de la came de commande (11) à la roue dentée oscillante (9) via la barre oscillante (13) et la tige de poussée (15), pour la commande synchrone du mouvement de déviation angulaire des surfaces rotatives (1, 2).

7. Dispositif de mise en rotation selon l'une quelconque des revendications précédentes, **caractérisé par** une inclinaison des surfaces rotatives (1, 2) dans la plage de -25° à 25° par rapport à la direction d'écoulement (S) du fluide.

8. Dispositif de mise en rotation selon l'une quelconque des revendications précédentes, **caractérisé en ce que** le mécanisme de réglage (10) règle l'angle de la surface rotative respective dans la plage de 0° à 180° du mouvement rotatif du dispositif rotatif principal à un premier angle positif constant et **en ce que** le mécanisme de réglage (10) règle l'angle de la surface rotative dans la plage de 180° à 360° du mouvement rotatif du dispositif rotatif principal (3) à un deuxième angle négatif constant par rapport à la direction d'écoulement du fluide, les angles possédant la même valeur affectée du signe inverse par rapport à la direction d'écoulement (S) du fluide.

9. Dispositif de mise en rotation selon l'une quelconque des revendications précédentes, **caractérisé en ce que** le mécanisme de réglage (10) règle une position neutre de la surface rotative respective par rapport à la direction d'écoulement (S), dans laquelle la surface rotative n'exerce aucun couple de rotation sur le dispositif rotatif principal (3).

10. Dispositif de mise en rotation selon la revendication 1, **caractérisé en ce que** lesdites au moins deux surfaces rotatives (20, 21) sont déformables et **en ce que** les surfaces rotatives (20, 21) possèdent respectivement deux pales (21.1, 21.2) couplées l'une à l'autre, aptes à sortir séparément l'une de l'autre.

11. Dispositif de mise en rotation selon la revendication 10, **caractérisé en ce que**, dans une plage entre 0° et 180° (= 0°) du mouvement circulaire du dispositif rotatif (30), la pale (21.1) d'une surface rotative (20, 21) dévie d'un angle constant par rapport à sa position parallèle, tandis que l'autre pale (21.2) de la surface rotative reste dans son orientation parallèle, et en revanche, **en ce que**, dans une plage du mouvement circulaire entre 180° et 360° (= 0°), la pale (21.1) reste constamment parallèle, tandis que l'autre pale (21.2) dévie d'un angle constant par rapport à la direction d'écoulement (S) du fluide ; et
**en ce que** dans les positions neutres de 0° et 180°, les pales (21.1, 21.2) de la surface rotative respective sont orientées parallèlement l'une à l'autre et parallèlement à la direction d'écoulement (S) du fluide.

12. Dispositif de mise en rotation selon la revendication 10 ou 11, **caractérisé en ce qu'**une roue dentée (20.4) à axe rotatif respectivement une roue dentée (21.4) à axe rotatif, qui sont reliées à demeure ou solidement à l'axe rotatif correspondant, viennent s'appuyer sur les axes (20.3, 21.3) des surfaces rotatives ; et
**en ce que** les roues dentées (20.4, 21.4) à axe rotatif sont couplées dans le rapport 1:1, respectivement, via une roue dentée intermédiaire à une roue dentée (22) à axe central dans laquelle l'axe central (M) est à même d'effectuer des rotations et qui est reliée solidement de manière stationnaire via une liaison (24) aux joues de support (5, 7).

13. Dispositif de mise en rotation selon l'une quelconque des revendications 10 à 12, **caractérisé en ce que**, pour la déviation des pales individuelles (21.1, 21.2) de la surface rotative déformable (21), on prévoit un mécanisme de réglage (25) sur chacun des axes (20.3, 21.3) des surfaces rotatives.

14. Dispositif de mise en rotation selon la revendication 13, **caractérisé en ce que** les mécanismes de réglage (25) possèdent une came de commande (26) comprenant une came radiale (26.1) réalisée sur 180°, une barre oscillante (26.3), un palier à rotule (26.5) sur la barre oscillante (26.3), une tige de poussée (26.4) et un entraînement de pale (26.6) qui est couplé via une tringlerie (26.7) à la pale (21.1) de la surface rotative (21) pour la déviation de la pale (21.1).

15. Dispositif de mise en rotation selon la revendication 14, **caractérisé en ce que** les axes (20.3, 21.3) des surfaces rotatives sont respectivement divisées en deux et possèdent respectivement un axe principal interne (21.33) et un manchon axial externe (21.31), et **en ce qu'**on prévoit des trous oblongs (21.32) ou d'autres ouvertures dans le manchon axial (21.31) pour obtenir un point de référence pour le réglage des pales, respectivement des surfaces rotatives.
